# EUROPÄISCHE PATENTANMELDUNG

(11) **EP 4 349 884 A1**
(43) Veröffentlichungstag der Anmeldung: **10.04.2024**
(21) Anmeldenummer: 23190754.4
(22) Anmeldetag: 10.08.2023
(51) Int. Cl.: C08G 77/18, C08G 77/06, C08K 5/057

(54) **VERFAHREN ZUR HERSTELLUNG VON ALKOXYSILOXANEN AUS ABFALLSILIKON**

(30) Priorität: 12.08.2022 EP 22190105
(71) Anmelder: Evonik Operations GmbH, 45128 Essen (DE)
(72) Erfinder: Knott, Wilfried, 45355 Essen (DE); Dudzik, Horst, 45326 Essen (DE); Henning, Frauke, 45259 Essen (DE)
(74) Vertreter: Evonik Patent Association

(57) **Zusammenfassung**

Verfahren zur Herstellung von Alkoxysiloxanen durch thermische Umsetzung von mindestens einem Abfallsilikon mit mindestens einem Alkalimetallalkoholat und mindestens einem Alkohol, wobei man in einem ersten Schritt das mindestens eine Abfallsilikon unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, und das aus dieser Reaktion hervorgehende Reaktionsgemisch in einem zweiten Schritt mit Hilfe von mindestens einer Brönstedtsäure neutralisiert, die festen Bestandteile abtrennt, und danach das Alkoxysiloxan durch thermisches Abtrennen flüchtiger Verbindungen isoliert.

## Beschreibung

Die Erfindung liegt auf dem Gebiet der Silikone. Sie betrifft insbesondere ein Verfahren zur Herstellung von einem oder mehreren Alkoxysiloxanen aus mindestens einem Abfallsilikon durch dessen Umsetzung mit mindestens einem Alkalimetallalkoholat und mindestens einem Alkohol, welche ohne Entfernung von etwaig auftretendem Wasser aus der Reaktionsmischung erfolgt. Weiterhin betrifft sie Alkoxysiloxane, erhältlich nach einem solchen Verfahren sowie die Verwendung von solchen Alkoxysiloxanen als polymerisationsaktive Massen.

Die Bedeutung der Verwertung bzw. Wiederverwertung von Abfallprodukten aus den Wirtschaftskreisläufen nimmt immer mehr zu. Das trifft auch auf die Verwertung von Silikonabfällen bzw. "End-of-Life"-Silikonen zu. Es besteht daher der Wunsch, auch in diesem Felde Fortschritte zu erzielen. Unabhängig davon besteht auf der anderen Seite ein stetiger Bedarf und damit eine stetige Nachfrage an organisch funktionalisierten Siloxanen, wie z.B. Alkoxysiloxanen.

Alkoxysiloxane sind Siloxane, welche eine oder mehrere, vorzugsweise zwei, Alkoxygruppen aufweisen. Lineare α,ω-Diatkoxysitoxane sind besonders bevorzugte Alkoxysiloxane im Sinne dieser Erfindung, ganz besonders bevorzugt sind lineare α,ω-Diatkoxypotydimethytsitoxane.

Anzustreben ist es daher, eine Möglichkeit bereitzustellen, die Verwertung von Silikonabfällen auf das Hervorbringen von organisch funktionalisierten Siloxanen, insbesondere von Alkoxysiloxanen auszurichten.

Methoden zur Herstellung von Alkoxysiloxanen sind an sich bekannt. Insbesondere sind vielfältige Methoden bekannt, die die Substitution von am Silizium gebundenen, reaktiven Gruppen durch Alkoxyreste beschreiben. Ohne auf diese zum Teil sehr alten Synthesewege, die sich des Austausches von Chlor beziehungsweise auch Wasserstoffs (dehydrogenative Route) bedienen im Detail einzugehen, sei als eine die präparativen Optionen beleuchtende Referenz auf W. Noll, Chemie und Technologie der Silicone, Verlag Chemie GmbH, Weinheim, (1960), S. 60-61 verwiesen, wo die Umwandlung reaktiver, dort allerdings am Silankörper gebundener Gruppen in Alkoxysilane diskutiert wird.

Eine geringere Anzahl an Arbeiten beschäftigen sich hingegen mit dem Zugang zu Alkoxysiloxanen ausgehend von nichtfunktionellen Siloxankörpern.

Bailey et al. beanspruchen mit der US 2.881.199 die Herstellung alkoxygruppentragender Silane sowie auch alkoxygruppentragender Di- und Trisiloxane durch säurekatalysierte Umsetzung von zyklischen Siloxanen mit Alkoholen unter Rückflussbedingungen und unter kontinuierlicher, azeotroper Entfernung des bei der Reaktion gebildeten Wassers. Bedingt durch die saure Reaktionsführung gewärtigen die Autoren bei den sehr langsam verlaufenden Umsetzungen (24 Stunden) zudem eine unerwünschte Veretherungsreaktion des eingesetzten Alkohols.

Gleichfalls säurekatalysiert setzen Zhurkina et al. (Zh. Obshch. Khim. 1989, 59, 1203-1204) Ethylorthoameisensäureester mit Octamethylcyclotetrasiloxan unter milden Bedingungen (16-20°C) zu einer Diethoxyoctamethyltetrasiloxan enthaltenden Reaktionsmischung um und isolieren dieses Siloxan durch anschließende Vakuumdestillation. Inwieweit der Einsatz von Ethylorthoameisensäureester als exotischem Wasserabfangreagenz akzeptable Ausbeuten gestattet, ist nicht referiert, jedoch der Hinweis gegeben, dass Ameisensäureethylester unter diesen Bedingungen nicht reagiert. Auch basisch katalysierte Siloxanumlagerungen sind bekannt.

So richtet sich die Lehre der US 3,477,988 auf die basisch katalysierte Umlagerung von Siloxanen in Gegenwart von Organophosphorverbindungen wie insbesondere Hexamethylphosphorsäuretriamid und schließt dabei sogar die Nutzbarmachung höhermolekularer Hydrolysate, Gummis und Kautschuke mit ein. Die Notwendigkeit, aprotisch-polare Lösungsmittel wie das krebserzeugende Hexamethylphosphorsäuretriamid einsetzen zu müssen, steht einer technischen Verwendung der Lehre entgegen.

Chang et al. (J. Polym. Res. 2005, 12, 433-438) haben sich der nukleophilen Spaltung quervernetzter Polysiloxane zu Gewinnung zyklischer Siloxanmonomere gewidmet, wobei sie zunächst ein vernetztes, gefülltes Polydimethylsiloxan wahlweise in der jeweils 4 bis 5fachen Menge an Tetrahydrofuran, Toluol oder Diethylamin bei Raumtemperatur über Nacht quellen ließen und die so gequollenen Proben danach mit separat vorbereiteten, homogenen Lösungen von Kaliumhydroxid in Dimethylamin beaufschlagt und unter Rühren bei Raumtemperatur gelöst haben. In Zeiträumen von 0,4 bis 4 Stunden beobachteten die Autoren komplette Auflösung der Silikongummibestandteile. Die nach 25 Stunden Reaktionszeit bestimmten Ausbeuten an zyklischen Produkten lagen im Bereich von 10 Gew.-% bis 77 Gew.-%., wobei die Ausbeute des in Diethylamin durchgeführten Auflösungsexperiments die Ausbeuten übertraf, die für die in Tetrahydrofuran, Tetrahydrofuran/Toluol und Toluol gefahrenen Versuche bestimmt wurden.

Wang und Lin widmen sich in K' o Hsueh Tung Pao, 1959, 3, 92-93 dem Abbau von Polyorganosiloxanen durch Butanolyse, wobei sie Natriumhydroxid als Spaltreagenz verwenden und ein Butanol-Wasser-Azeotrop kontinuierlich aus dem Reaktionssystem auskreisen. Das Dilemma einer in effektiver Konkurrenz zur Alkoxyfunktionalierung verlaufenden, alkalisch induzierten Polymerisation, die - weil sie ungeregelt - sowohl kurze als auch langkettige Spaltprodukte hervorbringt, können die Autoren nicht auflösen.

Vornokov und Shabarova beschreiben in Zh. Obshch. Khim.1959,29,1528-1534 (Russian Journal of General Chemistry 1959, 29, 1528-1534) die Herstellung von Organoalkoxysilanen durch Spaltung von Organosiloxanen mit C₄- bis C₁₂-Alkoholen unter basischen Bedingungen, wobei Alkalimetallhydroxide, Alkalimetallalkoholate oder die Alkalimetalle selbst zum Einsatz gelangen.

Die Autoren interpretieren die Reaktion des Organosiloxans mit Alkohol als eine Gleichgewichtreaktion, bei der es darauf ankommt, Reaktionswasser azeotrop oder unter Zuhilfenahme eines inerten, wasserunlöslichen Lösungsmittels oder aber präferiert unter Hinzufügung von Kieselsäureestern (Tetraalkoxysilanen) als wasserentziehende Mittel aus dem Reaktionssystem zu entfernen. Ohne Nutzung wasserentziehender Reagenzien ist hiernach weder die Herstellung von Alkoxysilanen möglich, die sich von Alkoholen mit Siedepunkten kleiner 90°C herleiten, noch das Erzielen hoher Ausbeuten an Alkoxysilanen.

Für die Herstellung von Alkoxysiloxanen weist die Publikation hingegen keinen Lösungsweg auf, denn für den Fachmann verständlich würde insbesondere der Verbleib hochsiedender Tetraalkoxysilane (zum Beispiel Tetraethoxysilan Kp. 168°C) sowie der daraus entstehenden Kondensationsprodukte einen erheblichen Trenn- und Reinigungsaufwand nach sich ziehen.

Petrus et al. beschäftigen sich mit der solvothermalen Alkoholyse von quervernetzten Silikonkautschukabfällen (Macromolecules 2021, 54, 2449-2465) unter Einsatz von C₈- bis C₁₂-Fettalkoholen und beschreiben unter anderem die Auflösung geschredderten Silikongummis im Hochdruckreaktor mit Hilfe von n-Octanol im Temperaturbereich zwischen 180°C und 240°C und bei Reaktionszeiten zwischen 16 und 18 Stunden.

Die Umsätze der Reaktion sind im Bereich von 22% bis 80% angegeben und die Analytik weist aus, dass Alkoxyoligosiloxane enstanden sind. Zur Interpretation des zunächst überraschenden Befundes, dass ein vernetztes Siloxan scheinbar unkatalysiert einer Alkoholyse zugänglich ist, nehmen Petrus et al. an, dass die hohen Aufschlusstemperaturen oberhalb von 200°C in Kombination mit Feuchtigkeit Säure aus dem peroxidisch vernetzten Silikonkautschuk freisetzt, die dann die Spaltung der Si-O-Si-Bindungen katalysiert.

Dem Fachmann ist bewusst, dass dieser kuriose Laborbefund weder geeignet ist, eine allgemeine technische Recyclinglösung für die Vielfalt aller, auch insbesondere nicht-peroxidisch ausgehärteten Silikonabfälle zu bieten und zudem noch nicht einmal gestattet, die verlässliche Grundlage für die solvothermale Alkoholyse beliebiger, nur peroxidisch-ausgehärteter Silikonabfälle zu legen, da die darin befindlichen Restgehalte aktiven organischen Peroxids je nach Material und Charge erheblichen Schwankungen unterliegen.

Der Zielsetzung verschrieben, diese Zufallsparameter auszuschließen und die besagte Alkoholysereaktion effektiver, das heißt, bei verkürzten Reaktionszeiten, erniedrigten Temperaturen und zudem bei geringer Katalysatorbeladung durchzuführen, setzten Petrus et al. (ibid.) Alkalimetallaryloxide gestützt durch den Methylsalicylatoliganden, sowie Magnesium- und Zinkaryloxide sowie gemischte Metallaryloxide mit Methylsalicylatoliganden als Katalysatoren ein. Als bester Komplex bei dieser Untersuchung erwies sich das Magnesium-Natrium-Kalium-Aryloxid [Mg₂M'₂ (MesalO)e(THF)₄] mit M' = Na, K und MesalO als dem Methylsalicylato-Liganden, welcher die Herstellung von Dioctanoxydimethylsilan und 1,3-Dioctanoxy-1,1,3,3-tetramethyldisiloxan in Ausbeuten von 79% bzw. 17% binnen 2 Stunden bei 220°C Reaktionstemperatur gestattet. Die aufwendige, schutzgasbedürftige metallorganische Präparation des Katalysators gereicht dem Verfahren zum gravierenden Nachteil.

Des Weiteren beschreiben Okamoto et al. in Appl.Catalysis A: General 261 (2004), 239 -245 die Depolymerisation von Polysiloxanen und von mit SiOz-gefüllten Silikongummi mit Dimethylcarbonat und Methanol zu Methoxytrimethylsilan und Dimethoxydimethylsilan unter Freisetzung von Kohlendioxid, wobei als Katalysatoren neben Alkalimetallhalogeniden auch Kaliumhydroxid und Natriummethylat zum Einsatz kommen. Zur Durchführung wird ein Autoklav benötigt, da man die Depolymerisation bei 180°C über einen Zeitraum von 15 Stunden durchführt. Der alleinige Einsatz sowohl von Methanol als auch von Dimethylcarbonat lässt die Depolymerisation nur zu 2 bzw. 3 Prozent stattfinden. Die Autoren schlussfolgern aus ihren Versuchen, dass sowohl Dimethylcarbonat als auch Methanol zugegen sein müssen, um Polysiloxane zu depolymerisieren. Die Anforderung sowohl eine druckfeste Apparatur als auch ein komplexes Aufschlusssystem sowie darüber hinaus noch lange Reaktionszeiten bei hoher Temperatur zu benötigen, machen diese Route für eine technische Umsetzung unattraktiv.

In Sicht aller dieser Anstrengungen definiert sich die zu lösende technische Aufgabe dadurch, einen praktikablen und möglichst einfachen synthetischen Zugang zu Alkoxysiloxanen ausgehend von Silikonabfällen bzw. "End-of-Life"-Silikonen zu finden, der auf komplexe Stoffsysteme wie insbesondere komplexe Lösungsmittelgemische sowie auf die Präparation und den Einsatz kostspieliger, exotischer Katalysatoren und möglichst auch auf Hochtemperaturreaktionen (≥ 200°C) in Spezialapparaturen, verzichtet.

Erstaunlicherweise wurde nun gefunden, dass diese technische Aufgabe zur Herstellung von Alkoxysiloxanen aus Abfallsilikonen durch den Gegenstand der Erfindung gelöst wird.

Der Gegenstand der Erfindung ist ein Verfahren zur Herstellung von einem oder mehreren Alkoxysiloxanen durch thermische Umsetzung von mindestens einem Abfallsilikon mit mindestens einem Alkalimetallalkoholat und mindestens einem Alkohol, wobei man
(a) in einem ersten Schritt das mindestens eine Abfallsilikon unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, insbesondere ohne den Einsatz von mit Wasser Azeotrope bildenden Solventien und/oder ohne den Einsatz weiterer, wasserentziehender Mittel, und
(b) das aus dieser Reaktion hervorgehende Reaktionsgemisch in einem zweiten Schritt mit Hilfe von mindestens einer Brönstedtsäure gegebenenfalls unter Hinzufügen von mindestens einem Solvens neutralisiert, die festen Bestandteile abtrennt, insbesondere abfiltriert, und
(c) danach das oder die Alkoxysiloxane durch thermisches Abtrennen flüchtiger Verbindungen isoliert.

Der Begriff des Abfallsilikons (oder synonym: "End-of-Life-Silikon") umfasst im Rahmen der erfindungsgemäßen Lehre alle silikonbasierten oder Silikon-enthaltenden Produkte sowie Produkte mit Silikonanhaftungen bzw. Silikonverunreinigungen, die jeweils ihre technische Lebensdauer oder Haltbarkeit nahezu und/oder bereits vollständig erreicht haben oder aber aus einem anderen Grunde für die Entsorgung vorgesehen wären. Die Haltbarkeit oder Lebensdauer bezeichnet dabei die Zeit, die ein Material oder ein Gegenstand ohne den Austausch von Kernkomponenten oder komplettes Versagen genutzt werden kann. Hierzu zählen im Rahmen der Lehre auch diejenigen Silikon-Kleb-und Silikon-Dichtstoffe zum Beispiel in Kartuschen, deren Haltbarkeits- oder Verfalldatum beinahe erreicht und/ oder überschritten ist (bewertet nach dem zu erwartenden und/ oder bereits eingetretenen Stadium der Aushärtung), sowie zum Beispiel auch mehr oder minder alte Anguss-und/ oder Stanzabfälle aus der Silikonkautschuk-Produktion oder ebenfalls auch ausrangierter Elektronikschrott, der silikonversiegelte Bauteile/ Bauteilgruppen enthält. Der Begriff Abfallsilikon umfasst im Rahmen der erfindungsgemäßen Lehre außerdem alle Silikonabfälle, auch Produktionsabfälle. Er umfasst insbesondere all jene Silikone oder silikonhaltigen Teile oder Teile mit Silikonanhaftungen oder Silikonanschmutzungen, die ansonsten für die gewöhnliche Entsorgung vorgesehen sind und demgemäß als Abfall betrachtet werden. Er umfasst somit z.B. auch für die Entsorgung vorgesehene Silikon-Kleb- und/oder -Dichtstoff-Kartuschen, insbesondere gebrauchte Silikon-Kleb- und/oder -Dichtstoff-Kartuschen, in und an welchen noch Silikonreste kleben oder vorhanden sind. Die Begriffe der "Abfallsilikone", "Silikonabfälle" und der "End-of-Life-Silikone" werden im Sinne dieser Erfindung synonym verstanden.

Insbesondere werden im Rahmen dieser Erfindung unter Abfallsilikon entsprechende Silikonkautschuke und/oder Silikonöle verstanden.

In dem erfindungsgemäßen Verfahren können jeweils ein oder mehrere Abfallsilikone ein- bzw. umgesetzt werden. d.h. es können auch Gemische unterschiedlicher Abfallsilikone ein- bzw. umgesetzt werden.

Wenn das erfindungsgemäße Verfahren zur Herstellung von Alkoxysiloxanen ein Verfahren zum Upcycling von Silikonabfällen, insbesondere von Silikon-Kleb- und/oder -Dichtstoffen, Silikonkautschuk-Abfällen und/ oder Silikonöl-Abfällen ist, wobei vorzugsweise Hexamethyldisiloxan ausgenommen ist, so liegt eine bevorzugte Ausführungsform der Erfindung vor. Upcycling bedeutet hier, aus minderwertigen, Silikonabfällen hochwertigere Reaktivsiloxane, nämlich Alkoxysiloxane bereitzustellen.

Wenn das mindestens eine Abfallsilikon, insbesondere Silikonöle, aus D- und M-Einheiten zusammengesetzt sind, so liegt eine weitere bevorzugte Ausführungsform der Erfindung vor.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Eine bevorzugte Ausführungsform der Erfindung liegt vor, wenn im ersten Schritt (a) noch mindestens ein zusätzliches Siloxan zugegeben wird, ausgewählt aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ und Silikonölen. Es können optional also jeweils ein oder mehrere sowie beliebigen Mischungen der zuvor genannten zusätzliches Siloxane in dem ersten Schritt (a) zugegeben werden.

Zyklisch-verzweigte Siloxane vom D/T-Typ sind zyklische Siloxane, die aus D- und T-Einheiten aufgebaut sind. Mischungen zyklischer-verzweigter Siloxane vom D/T-Typ sind demnach Gemische zyklischer Siloxane, welche aus D- und T-Einheiten aufgebaut sind. Mischungen zyklischer-verzweigter Siloxane vom D/T-Typ sind aus der Patentliteratur bekannt.

So beschreibt z.B. EP 3401353 A1 Mischungen zyklischer-verzweigter, D- und T-Einheiten aufweisender Siloxane und ein Verfahren zu deren Herstellung, nämlich ein Verfahren, umfassend (a) eine sauer katalysierte Äquilibrierung von Trialkoxysilanen mit Siloxancyclen und/oder α,ω-Dihydroxy-polydimethylsiloxan in Anwesenheit von mindestens einem sauren Katalysator und danach (b) eine durch Wasserzugabe eingeleitete Hydrolyse- und Kondensationsreaktion sowie Zugabe eines Siliciumhaltigen Lösemittels, gefolgt von, (c) einer destillativen Abtrennung des freigesetzten Alkohols, im System vorhandenen Wassers und Silicumhaltigen Lösemittels sowie einer Neutralisation oder Abtrennung des sauren Katalysators und ggf. Abtrennung womöglich gebildeter Salze, wobei das Silicium-haltige Lösungsmittel vorzugsweise die isomeren Siloxancyclen Oktamethylcyclotetrasiloxan (D4), Dekamethylcyclotetrasiloxan (D5) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

EP 3 321 304 A1 beschreibt Mischungen zyklischer-verzweigter, D- und T-Einheiten aufweisender Siloxane und ein Verfahren zu deren Herstellung Verfahren, wobei ein Trialkoxysilan in einem Lösemittel mit Siloxancyclen und/oder α,ω-Dihydroxy-potydimethytsitoxan unter Zugabe von Wasser und in Anwesenheit von mindestens einem sauren Katalysator umgesetzt wird.

EP 3 467 006 A1 beschreibt Mischungen zyklischer-verzweigter, D- und T-Einheiten aufweisende Siloxane und ein Verfahren zu deren Herstellung umfassend
(a) eine sauer katalysierte Äquilibrierung von Trialkoxysilanen mit Siloxancyclen und/oder α,ω-Dihydroxy-polydimethylsiloxan in Anwesenheit von mindestens einem sauren Katalysator und danach
(b) eine durch Wasserzugabe eingeleitete Hydrolyse- und Kondensationsreaktion gefolgt von der Zugabe eines Silicium-haltigen Lösemittels,
(c) mit einer anschließenden destillativen Abtrennung des freigesetzten Alkohols und Anteilen des im System vorhandenen Wassers,
(d) mit anschließender Zugabe von Toluol und Auskreisen restlichen im Stoffsystem verbliebenen Wassers,
(e) gefolgt von einer Neutralisation oder Abtrennung des sauren Katalysators und gegebenenfalls Abtrennung womöglich gebildeter Salze,
(f) mit abschließender destillativer Entfernung noch im System vorhandenen Toluols, wobei das Silicium-haltige Lösungsmittel vorzugsweise die isomeren Siloxancyclen Oktamethylcyclotetrasiloxan (D₄), Dekamethylcyclopentasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

Wenn das mindestens eine Abfallsilikon Molmassen > 236 g/ mol aufweist, so liegt eine weitere bevorzugte Ausführungsform der Erfindung vor.

Wenn sich das erfindungsgemäße Verfahren zur Herstellung von Alkoxysiloxanen dadurch auszeichnet, dass das mindestens eine Abfallsilikon ausgewählt ist aus Silikon-Kleb- und/oder Silikon-Dichtstoffen, vorzugsweise Silikon-Kleb- und/oder Silikon-Dichtstoff-Kartuschen betrifft, insbesondere Silikon-Kleb- und/oder Silikon-Dichtstoff-Reste in und/oder an PE-Behältnissen, bevorzugt umfassend HDPE und/oder LDPE, betrifft, so liegt eine weitere bevorzugte Ausführungsform der Erfindung vor.

Übliche Silikon-Kleb- und/oder Silikon-Dichtstoff-Kartuschen umfassen gewöhnlich eine Silikon-Kleb- und/oder Silikon-Dichtstoffmasse in einem Polyethylen-Behältnis (PE-Behältnis), welches ein Herausdrücken der Silikon-Kleb- und/oder Silikon-Dichtstoffmasse ermöglicht, wobei der Behältnis-Mantel gewöhnlich aus HDPE (High Density Polyethylene) und die halbtransparenten Behältnis-Teile (Kolben und Ausdrückspitze) gewöhnlich aus LDPE (Low Density Polyethylene) gefertigt sind. HDPE und LDPE sind dem Fachmann bekannt. HDPE weist eine hohe Dichte zwischen 0,94 g/cm³ und 0,97 g/cm³ auf; LDPE weist eine demgegenüber geringere Dichte zwischen 0,915 g/cm³ und 0,935 g/cm³ auf.

Das erfindungsgemäße Verfahren ermöglicht somit als weiteren erheblichen Vorteil auch noch die im Wesentlichen sortenreine Rückführung von Polyethylen, insbesondere High Density Polyethylene (HDPE), welches aus vorzugsweise gebrauchten Silikon-Kleb- und Silikon -Dichtstoffkartuschen stammt. Es ermöglicht ganz allgemein die Verwertung Silikon-kontaminierter PE-Abfälle unter Bereitstellung Alkoxygruppen tragender Siloxane unter im Wesentlichen sortenreiner Rückgewinnung von Polyethylen.

Wie bedeutend und groß das spezielle Problem einer Silikonkontamination in HDPE-Abfällen ist, geht unter anderem aus einer Studie von Ketenakkoord Kunststofkringloop en Afvalfonds Verpakkingen "Kitkokers in een circulaire economie", Autoren I. Gort und S. Haffmans vom 01.05.2017 hervor (erhältlich vom Kennisinstituut Duurzaam Verpakken, Zuid Hollandlaan 7, 2596 AL Den Haag, Niederlande, oder deren Internetauftritt unter https://kidv.nl/ und zwar https://kidv.nl/media/rapportages/kitkokers_in_een_circulaire_economy.pdf?1.1.2-rc.1) die verdeutlicht, welche dramatischen Effekte kleine Silikonverunreinigungen auf die Wiederverwendbarkeit aus Abfall gewonnenen Re-Granulats haben. So wandern Silikonanteile selbst durch die feinen, 150-µm-Schmelzsiebe eines Granulat erzeugenden Extruders hindurch und gelangen dabei ins Re-Granulat und verursachen letztlich Produktionsfehler beim Kunststoffverarbeiter der beispielsweise Kunststoffschläuche blasextrudiert. Man konstatiert, dass bereits ein Silikonkörnchen Oberflächendefekte und Löcher im Polymer hervorrufen kann, so dass hierdurch gegebenenfalls eine komplette, stundenwährende Produktionscharge unbrauchbar wird. Das kontaminierte HDPE ist von minderwertiger Qualität und kann somit auch nur noch für unkritische Zwecke verwendet werden. Akzeptabel sind diese silikonkontaminierten Kartuschenrecyclate derzeit nur bei der Verarbeitung zu groben Objekten wie Dämmwänden, Gerüstbohlen, Begrenzungspfosten, Eisenbahnschwellen und Picknicktischen, bei denen die Präsenz von Silikonteilchen weniger auffällt, da man hierbei nicht zwingend eine glatte Oberfläche erwartet. In die stoffliche Wiederverwertung der Silikonkomponente setzt bezeichnete Studie allerdings keine Hoffnung. Die Silikonreste insbesondere gebrauchter und somit teilentleerter Silikondichtstoffkartuschen kleben und das noch abhängig vom Stadium des Durchhärtungsprozesses üblicherweise hartnäckig an der sie umgebenden Kartuschenwandung sowie an dem Ausdrückkolben und an der Ausdrückspitze der Kartusche fest und lassen sich nicht einfach und schon gar nicht in Gänze von dem überwiegend eingesetzten HDPE abtrennen. Nach Angaben der Studie bestehen grundsätzlich alle Teile einer Dichtstoffkartusche aus Polyethylen, wobei der Mantel aus HDPE und die halbtransparenten Teile (Kolben und Ausdrückspitze) oft aus LDPE (Low Density Polyethylene) gefertigt sind.

Es wurde nun im Rahmen der vorliegenden Erfindung überraschenderweise weiterhin festgestellt, dass man gemäß einer bevorzugten Ausführungsform der Erfindung die in der Kartusche verbliebenen durchgehärteten Silikonreste vollständig von HDPE und LDPE lösen kann, indem man die vorzugsweise zerkleinerte, z.B. in kleine Stücke zerschnittene Dichtstoffkartusche in einem ersten Schritt unter Durchmischung mit mindestens einem Alkalimetallalkoholat und mindestens einem Alkohol, gegebenenfalls in Gegenwart eines oder mehrerer optionaler, zusätzlicher Siloxane unter Wärmeeintrag, umsetzt.

Hierbei lösen sich die Silikonreste vollständig vom Trägermaterial ab, welches dann durch Filtration und gegebenenfalls noch Waschung(en) und Trocknung als nahezu sortenreines, silikonfreies HDPE bzw. LDPE gewonnen werden kann.

Das hierbei abgelöste Silikon kann erfindungsgemäß in ein Alkoxygruppen tragendes Siloxan transformiert werden.

Somit eröffnet der erfindungsgemäß aufgefundene Weg zusätzlich die technische Möglichkeit, neben sortenreinem HDPE auch noch im Sinne eines Upcyclings aus minderwertigen, problematischen Silikonabfällen hochwertige Reaktivsiloxane, nämlich Alkoxysiloxane, zu gewinnen, die zu wertvollen, grenzflächenaktiven Additiven verarbeitet werden können.

End-of-Life-Silikondichtstoffkartuschen können gemäß einer bevorzugten Ausführungsform der Erfindung mit ihren Silikonanhaftungen vorteilhafterweise zunächst durch Kontakt zum Beispiel mit flüssigem Stickstoff oder auch Trockeneispellets kaltversprödet, das heißt, in ihrer Elastizität deutlich abgesenkt und dann geeignet zerkleinert werden. Die Zerkleinerung kaltversprödeter Silikondichtstoffkartuschen kann zum Beispiel mit Hilfe eines Brechers, eines Schredders, einer Mühle, eines Hammerwerks, mit Hilfe von Walzen oder einem Knetwerk oder auch mit Hilfe schneidender Maschinen erfolgen. Am Ende der Zerkleinerung besitzt das kleinstückige, silikonbehaftete Kartuschenmaterial bevorzugt Kantenlängen von 1 bis 10 mm, insbesondere von 3 bis 6 mm. Bevorzugt setzt man das zerkleinerte Material in einem ersten Schritt unter Durchmischung mit mindestens einem Alkalimetallalkoholat und mindestens einem Alkohol gegebenenfalls in Gegenwart einer oder mehrerer weiterer optionaler Siloxane unter Wärmeeintrag um.

Ebenfalls bevorzugt, jedoch weniger bevorzugt, kann man jedoch auch zum Beispiel in Anlehnung an die Lehre der WO 2008/097306 A1 kleinstückiges, silikonbehaftetes Kartuschenmaterial zunächst einer Vortrennung unterwerfen, indem man dieses in eine Flüssigkeit einbringt, deren Dichte zwischen der des Silikons und des Kartuschenkunststoffs liegt und somit zu einer Dichteseparation von Kartuschenmaterial und Silikonanteilen führt (entspricht der Bildung dichteseparierter Schichten).

Die Grenzen dieser Art von Vorseparation werden unter anderem in der Studie von Ketenakkoord Kunststofkringloop en Afvalfonds Verpakkingen (s.o., S. 22 und 34) aufgezeigt. So sinkt die Trennschärfe in der Dichteseparation zum Beispiel durch okkludierte Lufteinschlüsse im Silikon, die Auftrieb verursachen und dazu führen, das mehr oder minder große Anteile an Silikon auch wieder in der Kunststoffschicht landen.

Es ist bevorzugt, wenn man den ersten Schritt des erfindungsgemäßen Verfahrens in einem Reaktor von mindestens einem Liter Volumen durchführt. Dies entspricht einer bevorzugten Ausführungsform der Erfindung. Der alkalischen Natur des erfindungsgemäßen Reaktionsmediums Rechnung tragend, wird das Reaktormaterial vorzugsweise aus Metall, vorzugsweise hochlegierten Edelstählen, besonders bevorzugt aus Hastelloy ausgewählt.

Der Reaktor selbst sollte gemäß einer bevorzugten Ausführungsform der Erfindung - sofern nicht elektrisch beheizt- vorzugsweise über einen Heizmantel verfügen, der die Ankoppelung an einen geeigneten Wärmeträgerkreislauf (zum Beispiel auf Basis von Wärmeträgeröl- oder Heißdampf) gestattet.

Vorzugsweise kann z.B. mit Blick auf silikonbehaftetes Kartuschenmaterial so vorgegangen werden, dass das kleinstückige, silikonbehaftete Kartuschenmaterial im Sinne intensiver Kontaktierung und erleichterter Ablösung des Silikons von z.B. HDPE/ LDPE im ersten Schritt durch die Nutzung eines effektiven Rührorgans bewegt wird.

Sollten, wie z.B. mit Blick auf silikonbehaftetes Kartuschenmaterial, im Abfallsilikon beispielsweise Füllmaterialien enthalten sein, so werden diese ebenfalls durch die An-, Ab- und Auflösung des Silikons vom z.B. ggf. vorhandenen HDPE bzw. LDPE frei. Im Zuge des erfindungsgemäßen Verfahrens lassen sich gemäß einer bevorzugten Ausführungsform der Erfindung etwaig vorhandene kleinstückige HDPE- bzw. LDPE-Teilchen zum Beispiel mit Hilfe eines groben Siebes vom flüssigen, ggf. Füllmaterial durchsetzten Reaktivsiloxan, nämlich Alkoxysiloxan, filtrierend abtrennen, das man darauf beispielsweise durch ein Absitzenlassen von dem festen, feinteiligen Füllstoff scheiden kann.

Ohne die vorgestellte Lehre zu schmälern, lassen sich zur vorteilhaften Ausgestaltung für die hier angesprochenen verfahrenstechnischen Basisoperationen naturgemäß auch noch weitere Lösungen finden, wie zum Beispiel ein Abfiltrieren oder ein Zentrifugalabscheiden etwaigen Füllstoffes vom Alkoxysiloxan. Dies entspricht einer bevorzugten Ausführungsform der Erfindung.

Spuren an Silikon, z.B. mit Blick auf silikonbehaftetes Kartuschenmaterial, lassen sich gemäß einer bevorzugten Ausführungsform der Erfindung von den ggf. vorhandenen kleinstückigen HDPE- bzw. LDPE-Teilchen durch geeignete Waschung, zum Beispiel durch das innige Kontaktieren mit Lösungsmitteln, Abtrennen derselben und anschließende Trocknung des/der sortenreinen Polymer(en)s beseitigen.

Erfindungsgemäß setzt man das mindestens eine, gegebenenfalls zuvor noch mechanisch zerkleinerte, Abfallsilikon in einem ersten Schritt unter Durchmischung mit mindestens einem Alkohol und mindestens einem Alkalimetallalkoholat unter Wärmeeintrag um.

Das erfindungsgemäße Verfahren zur Herstellung von einem oder mehreren Alkoxysiloxanen durch thermische Umsetzung von mindestens einem Abfallsilikon mit mindestens einem Alkalimetallalkoholat und mindestens einem Alkohol, gegebenenfalls in Gegenwart zusätzlicher optionaler Siloxane, wird vorzugsweise unter Normaldruck, das heißt, bei einem auf die Apparatur wirkenden, äußeren Luftdruck von 1.013,25 hPa durchgeführt.

Im Rahmen einer weiteren bevorzugten Ausführungsform und für die erzielbare Ausbeute an Alkoxysiloxan vorteilhaft, kann die erfindungsgemäße Umsetzung auch unter Überdruckbedingungen in einem druckfesten Reaktor durchgeführt werden. Der dabei verzeichnete Druckaufbau ist autogener Natur und geht auf den Dampfdruck der darin involvierten Systemkomponenten zurück. Falls gewünscht, kann der Reaktor zudem vorzugsweise noch mit einem Inertgaspolster beaufschlagt werden.

Für die Anwendung des erfindungsgemäßen Verfahrens im technischen Maßstab kann es empfehlenswert und folglich bevorzugt sein, das jeweilige Abfallsilikon zuvor mit Hilfe einiger orientierender Vorversuche im Labormaßstab zu bewerten, um so die jeweils optimalen Verfahrensparameter zu ermitteln.

Dabei beeinflussen für den Fachmann verständlich unter anderem der Polymerisationsgrad, der Grad an Quervernetzung sowie, falls vorhanden, die Art und Menge des im jeweiligen Abfallsilikon ggf. verarbeiteten Füllstoffs dessen Verhalten in der erfindungsgemäßen Umsetzung. Unter den Abfallsilikonen stellen insbesondere peroxidisch-nachvernetzte und zudem noch getemperte Silikonkautschuke stets eine besondere technische Herausforderung für das chemische Recycling dar. Die Temperung von Silikonkautschukteilen verbessert deren Dimensionsstabilität und verhindert das Ausschwitzen von Weichmachern insbesondere während der Anwendung unter großer Hitze.

Es ist bevorzugt, wenn die thermische Umsetzung des mindestens einen Abfallsilikons im Rahmen des erfindungsgemäßen Verfahrens, wie z.B. entsprechender Silikonöle und/oder Silikonkautschuke, vorzugsweise zwischen 50°C und 200°C, bevorzugt zwischen 80°C und 180°C, insbesondere zwischen 120°C und 170°C vorgenommen wird.

Unter Alkalimetallalkoholat werden im Rahmen dieser Erfindung vorzugsweise Verbindungen der allgemeinen Formel:

[M⁺][OR⁻]

verstanden, wobei
- M: ausgewählt ist aus der Reihe der Alkalimetalle Li, Na oder K, bevorzugt Na oder K und
- R: einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt; gemäß einer bevorzugten Ausführungsform der Erfindung wird das mindestens eine Alkalimetallalkoholat dementsprechend aus den vorgenannten Verbindungen ausgewählt. Es können in dem erfindungsgemäßen Verfahren ein oder mehrere Alkalimetallalkoholate eingesetzt werden. Am meisten bevorzugt ist der Einsatz von Kaliumethanolat, Natriumethanolat, Kaliummethanolat und/oder Natriummethanolat.

Zu den bekannten Verfahren der Herstellung von Alkoholaten gehört die Chloralkali-Elektrolyse nach dem Amalgam-Verfahren, bei der Natriumamalgam mit Alkohol umgesetzt wird [vgl. z. B. Chemical and Engineering News 22, 1903-06 (1944)].

Eine weitere bekannte Methode ist die Herstellung von Alkoholaten aus einem Alkalimetall und einem Alkohol bzw. aus einem Alkalihydroxid und einem Alkohol. Die Alkoholatproduktion aus einem Alkalimetall und einem tertiären Alkohol ist z. B. aus DE-23 33 634 (Dynamit Nobel) oder DE 26 12 642 (Degussa) bekannt. Die Herstellung eines Alkoholats aus einem Alkalihydroxid und einem tertiären Alkohol ist ebenfalls bekannt. Die erste Verfahrensvariante erfordert den Einsatz von teurem Alkalimetall, und bei der zweiten Variante ausgehend vom Alkalihydroxid muss das bei der Umsetzung entstehende Wasser destillativ entfernt werden, was den entsprechenden hohen thermischen Aufwand erfordert.

Der Lehre der DE-A-33 46 131 folgend, werden Alkalialkoholate elektrolytisch aus Salzen hergestellt, wobei eine Elektrolysezelle, bei der eine Kationenaustauschmembran die Elektrodenräume trennt, eingesetzt wird. In DE-42 33 191.9-43 wird ein Verfahren beschrieben, dass die Herstellung eines Alkalialkoholats aus einem Salz durch Elektrodialyse ermöglicht.

Ebenfalls sind Verfahren zur Herstellung von Sonderalkoholaten, wie zum Beispiel den Alkoholaten höherer und/oder mehrwertiger Alkohole vereinzelt beschrieben.

Alkoholate höherer und/oder mehrwertiger Alkohole lassen sich bekanntlich grundsätzlich durch Umalkoholisieren, d. h., durch Substitution des Alkoholatrestes niederer Alkoholate ROM durch Umsetzung mit höheren Alkoholen R'OH (wobei R und R' Alkylreste unterschiedlicher Kohlenstoffkettenlänge sind und M ein Metallkation bezeichnet) in einem flüssigen Reaktionsgemisch bei geeigneten Temperatur- und Druckverhältnissen herstellen. Diese Umsetzung wird im Laborjargon auch als "Umkochen" bezeichnet. Die Lage des Gleichgewichts ROM+ R'OH ⇔ ROH + R'OM hängt von der Acidität der beiden Alkohole ab, die in der Reihenfolge Methanol > primäre > sekundäre > tertiäre Alkohole abnimmt [R. T. Mclver und J. A. Scott, J. American Chem. Soc. 96 (1973) 2706]. Daher soll die Herstellung der Alkoholate sekundärer Alkohole auf diesem Wege nur in Ausnahmefällen möglich sein und die Herstellung der Alkoholate tertiärer Alkohole durch Umalkoholisierung gar nicht gelingen ["Methoden der Organischen Chemie" (1963) Bd. 6/2, S. 13]. Jedoch wurde die Herstellung von Alkoholaten durch Umkochen in DE-1 254 612 und in DE- 27 26 491 (beide von Dynamit Nobel) auch für höhere Alkohole beschrieben. GB-1 143 897 (Metallgesellschaft) beschreibt die Umsetzung eines einwertigen Alkalialkoholats mit einem bis zu sechs Hydroxylgruppen enthaltenden C₂- bis C₁₈-Alkohol oder-Phenol, wobei als Lösungsmittel ein Überschuss an einwertigem Alkohol und/oder ein Kohlenwasserstoff eingesetzt wird.

Das Umkochen führt aber immer zur Bildung des leichtsiedenden Alkohols ROH (z. B. Methanol), der zur Isolierung des gewünschten Alkoholats - gegebenenfalls zusätzlich zum nicht umgesetzten höheren Alkohol R'OH - aus dem Reaktionsproduktgemisch zum Teil mit erheblichem thermischen Aufwand abgetrennt werden muss.

Abseits dieser thermisch geführten Gleichgewichtsverschiebungen lehrt die EP 0776995 (B1) ein Verfahren zur Herstellung von Alkoholaten unter dem Einfluss eines elektrischen Feldes, wobei ein Alkohol durch Zufuhr von Metallionen in das gewünschte Alkoholat umgesetzt wird und die Metallionen selbst aus der elektrochemischen Zerlegung eines anderen Alkoholates in dem elektrischen Feld stammen. Die Alkoholatbildung und die -zerlegung erfolgen in räumlich durch lonenaustauschmembranen getrennten Kammern.

Das mindestens eine Alkalimetallalkoholat wird im erfindungsgemäßen Verfahren vorzugsweise in Gesamt-Mengen von 1 bis 10 Massen-%, bevorzugt 2 bis 7 Massen-%, besonders bevorzugt 3 bis 6 Massen-% bezogen auf die Gesamt-Masse des bei der Umsetzung insgesamt verwendeten Silikons (= Summe aus der Masse des insgesamt eingesetzten mindestens einen Abfallsilikons plus der ggf. noch hinzugesetzten Masse an optionalem, weiterem Siloxan) eingesetzt. Dies entspricht einer bevorzugten Ausführungsform der Erfindung.

Das erfindungsgemäße Verfahren wird in dem ersten Schritt (a) vorzugsweise im Temperaturbereich von 100°C bis 200°C, bevorzugt im Temperaturbereich von 120°C bis 160°C und über einen Zeitraum von vorzugsweise 1 bis 12 Stunden, bevorzugt über einen Zeitraum von 2 bis 8 Stunden und das jeweils bevorzugt lösemittelfrei durchgeführt. Dies entspricht einer bevorzugten Ausführungsform der Erfindung.

Gemäß einer bevorzugten Ausführungsform der Erfindung ist der im erfindungsgemäßen Verfahren eingesetzte mindestens eine Alkohol ausgewählt aus der Gruppe der C₁- bis C₁₀-Alkanole; es können also ein oder mehrere Alkohole, also auch Mischungen von Alkoholen eingesetzt werden, vorzugsweise können Methanol, Ethanol, 1- Propanol, Isopropanol, 1-Butanol, 2-Butanol, iso-Butanol, Pentanole, Hexanole, Heptanole, Octanole, Nonanole und/oder Dekanole, jeweils umfassend auch deren Isomere, eingesetzt werden, besonders bevorzugt sind Methanol und/oder Ethanol.

Gemäß einer bevorzugten Ausführungsform wird der mindestens eine Alkohol im erfindungsgemäßen Verfahren in Gesamt-Mengen von 10 bis 200 Massen-%, bevorzugt 20 bis 100 Massen-%, besonders bevorzugt in Mengen 30 bis 80 Massen-% bezogen auf die Gesamt-Masse des bei der Umsetzung insgesamt verwendeten Silikons (= Summe aus der Masse des insgesamt eingesetzten mindestens einen Abfallsilikons plus der gegebenenfalls noch hinzugesetzten Masse an optionalem, weiterem Siloxan) eingesetzt.

Wenn das im ersten Schritt a) des erfindungsgemäßen Verfahrens optional noch hinzugesetzte mindestens eine Siloxan ausgewählt aus ist aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ, Silikonöle, Polydimethylsiloxandiole und α,ω-Divinytsitoxane, so liegt eine weitere bevorzugte Ausführungsform der Erfindung vor; dies umfasst auch den Einsatz beliebiger Mischungen der zuvor genannten Siloxane. Die bevorzugte gesamte Zugabemenge dieses im ersten Schritt a) gegebenenfalls noch hinzugesetzten mindestens einen Siloxans kann dabei vorzugsweise so bemessen sein, dass sie der 0,5- bis 5-fachen Menge des insgesamt zu verarbeitenden Abfallsilikons entspricht.

Die Gewährleistung einer guten Rührfähigkeit und Durchmischbarkeit im ersten Schritt a) des erfindungsgemäßen Verfahrens kann die Leichtigkeit, mit der der Auflösungsprozess stattfindet, vorzugsweise positiv beeinflussen. Unter diesem Gesichtspunkt kann es zur Vermeidung hoher Scher- und Rührleistungen bevorzugt sein, insbesondere bei der Verwendung fester Abfallsilikone mit einem hohen Polymerisationsgrad und eventueller Quervernetzung den ersten Schritt a) des erfindungsgemäßen Verfahrens z.B. sequenziert zu gestalten, das heißt, zunächst eine Portion gegebenenfalls zuvor zerkleinerten Abfallsilikons mit Alkalimetallalkoholat(en) und Alkohol(en) gegebenenfalls in Gegenwart weiterer optionaler Siloxane unter Wärmeeintrag umzusetzen und danach die Konsistenz der Reaktionsmatrix im Hinblick auf deren Rührfähigkeit und Durchmischbarkeit zu bewerten. Erweist sich diese Reaktionsmatrix als gut rührbar, so kann man eine weitere Portion des Abfallsilikons hinzufügen und den Prozess erfindungsgemäß fortsetzen. Dieses Vorgehen kann man so lange fortsetzen, bis die Reaktionsmatrix die gewünschte Zielrheologie aufweist. Dies entspricht einer bevorzugten Ausführungsform der Erfindung.

Eine weitere, erfindungsgemäß bevorzugte Ausführungsform der Erfindung, welche eine Verbesserung der Raum-Zeit-Ausbeute ermöglichen kann, kann darin bestehen, im ersten Schritt a) des erfindungsgemäßen Verfahrens eine Teilmenge des gesamten aufzuschließenden Abfallsilikons zusammen mit Alkalimetallalkoholat(en) und Alkohol(en) unter Durchmischung und Erwärmen vorzulegen, so dann abzuwarten, dass sich die Reaktionsmatrix homogenisiert hat und dann den verbliebenen Alkohol destillativ und das gegebenenfalls unter Anlegen eines Hilfsvakuums, zu entfernen. Unter Beachtung der sich jeweils einstellenden Rheologie kann die im Reaktor zurückbleibende Reaktionsmasse auf diese Weise durch die weitere portionierte Zugabe von Abfallsilikon ein- oder mehrfach ergänzt werden, so dass man über den gesamten Reaktionsverlauf hinweg stets eine gut durchmischbare und letztendlich homogene Reaktionsmasse sicherstellt.

Erfindungsgemäß wird die aus dem ersten Reaktionsschritt a) des erfindungsgemäßen Verfahrens hervorgehende Reaktionsmischung in einem zweiten Schritt (b) durch Hinzufügen von mindestens einer Brönstedtsäure, gegebenenfalls unter Hinzufügen von mindestens einem Solvens, neutralisiert. Es können eine oder mehrere Brönstedtsäuren eingesetzt werden. Dabei können vorzugsweise wasserfreie Mineralsäuren (wie vorzugsweise wasserfreie Schwefelsäure und/oder wasserfreie Perchlorsäure) und/oder wasserfreie organische Säuren (wie vorzugsweise wasserfreie Essigsäure) zur Neutralisation eingesetzt werden.

Im Falle der Verwendung von wasserfreier Mineralsäure(n) bemisst man deren Zugabemenge vorzugsweise so, dass stöchiometrische Äquivalenz bezogen auf das insgesamt eingesetzte Alkalimetallalkoholat erzielt wird. Bei Verwendung der deutlich schwächeren, wasserfreier organischen Säure(n) (wie z.B. wasserfreier Essigsäure) wählt man vorzugsweise einen deutlichen stöchiometrischen Überschuss an Säure bezogen auf insgesamt eingesetztes Alkalimetallalkoholat. Dieser wird vorzugsweise bis zum 50%igen Überschuss bemessen.

Die Einsatzmenge der insgesamt eingesetzten Brönstedtsäure wird vorzugsweise also so gewählt, dass sie von der stöchiometrischen Äquivalenz bis zum 50%igen stöchiometrischen Überschuss reicht, jeweils bezogen auf insgesamt eingesetztes Alkalimetallalkoholat.

Insbesondere dann, wenn die aus dem erfindungsgemäßen Neutralisationsschritt absehbare Salzmenge einer leichten Filtration im Wege steht, ist vorzugsweise der Einsatz von mindestens einem Solvens vorzusehen. Es können optional ein oder mehrere Solventien eingesetzt werden.

Als ein oder mehrere Solventien eignen sich erfindungsgemäß bevorzugt solche, die selbst mit Blick auf das Reaktionssystem chemisch inert sind und die Verdünnung bzw. Dispersion der Bestandteile der Neutralisationsstufe fördern. Bevorzugt ist das mindestens eine Solvens ausgewählt aus der Gruppe bestehend aus Alkanen, Alkylaromaten und Alkoholen. Besonders bevorzugt ist der Einsatz von Alkylaromaten, wie vorzugsweise Toluol und/oder Xylole. Ebenfalls bevorzugt einsetzbar sind Siloxane ausgewählt aus der Gruppe bestehend aus Hexamethylcyclotrisiloxan (D₃), Octamethylcyclotetrasiloxan (D₄), Dekamethylcyclopentasiloxan (D₅) und Dodekamethylcyclohexasiloxan (D₆) sowie deren Mischungen.

Dann können die aus der Neutralisation hervorgehenden festen Bestandteile vorzugsweise abgetrennt, insbesondere abfiltriert werden. Dann werden, insbesondere nach Abfiltrieren der aus der Neutralisation hervorgehenden festen Bestandteile, die flüchtigen Verbindungen thermisch abgetrennt und das Alkoxysiloxan isoliert.

Auf diese Weise gelangt man erfindungsgemäß einfach zu den entsprechenden ein oder mehreren Alkoxysiloxanen.

Ein weiterer Gegenstand der Erfindung sind demgemäß Alkoxysiloxane, hergestellt gemäß dem erfindungsgemäßen Verfahren.

Die erfindungsgemäß erhaltenen Alkoxysiloxane kann man als Ausgangsmaterialien für polymerisationsaktive Massen und dann bevorzugt unter Zusatz geeigneter Vernetzungskatalysatoren, ggf. noch in Abmischung mit weiteren vernetzenden Silanen und/ oder Siloxanen, ggf. mit Füllstoffen und/ oder Pigmenten gefüllt und/ oder ungefüllt als Kleb - und/oder Dichtstoffe einsetzen.

Ein weiterer Gegenstand der Erfindung ist also die Verwendung von erfindungsgemäß erhaltenen Alkoxysiloxanen als polymerisationsaktive Massen, bevorzugt als Kleb - und/oder Dichtstoffe.

Darüber hinaus eignen sich die erfindungsgemäß gewonnen Alkoxysiloxane zum Beispiel auch als Ausgangsmaterialien für die Herstellung von SiOC-verknüpften Polyethersiloxanen durch Umesterung mit Polyetherolen in Gegenwart von Zinkacetylacetonat als Katalysator, wie es in der Europäischen Patentschrift EP 3438158 (B1) dargelegt wird.

Ein weiterer Gegenstand der Erfindung ist also die Verwendung von erfindungsgemäß erhaltenen Alkoxysiloxanen zur Herstellung von SiOC-verknüpften Polyethersiloxanen durch Umesterung der Alkoxysiloxane mit Polyetherolen in Gegenwart von Zinkacetylacetonat als Katalysator.

Falls vor der hier beschriebenen Weiterverarbeitung zum Beispiel besondere zahlenmittlere Siloxankettenlängen gewünscht sind, können die erfindungsgemäß erhaltenen Alkoxysiloxane ggf. noch einer nachgeschalteten, vorzugsweise sauer-katalysierten Äquilibrierung unterworfen werden, um die Zielkettenlängen einzustellen.

Gleichfalls ist es möglich, die erfindungsgemäß erhaltenen Alkoxysiloxane beispielsweise durch die Umsetzung in einem Reaktionsmedium, umfassend Essigsäureanhydrid, Perfluoralkansulfonsäure (insbesondere Trifluormethansulfonsaure) sowie vorzugsweise Essigsäure, unter Auskreisen des jeweiligen Essigsäureesters in die entsprechenden Acetoxygruppen aufweisenden Siloxane, wie in der Patentanmeldung EP 3663346 A1 beschrieben, zu überführen und diese gleichfalls als reaktive Intermediate, wie beispielsweise zur Herstellung von SiOC-verknüpften Polyethersiloxanen oder auch als Ausgangsmaterialien für polymerisationsaktive Massen einzusetzen.

### Beispiele:

Die folgenden Beispiele dienen dem Fachmann allein zur Erläuterung dieser Erfindung und stellen keinerlei Beschränkung des erfindungsgemäßen Gegenstandes dar. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard[δ (²⁹Si) = 0,0 ppm] gemessen.

Soweit nicht anders gesagt, sind alle Prozentangaben als Angaben in Gewichtsprozenten zu verstehen.

### Beispiel 1 (erfindungsgemäß)

In einem 300-ml-Druckreaktor der Fa. Roth ausgestattet mit einem magnetgekoppelten Rührer, einem Manometer sowie Heizhaube mit integriertem Thermoelement werden 30 g eines in kleine, irreguläre Stückchen von ca. 5 bis 10 mm Durchmesser zerschnittenen, elastischen Silikonkautschuks zusammen mit 70 g D₅, 30 g Methanol sowie 5 g Kaliummethanolat eingewogen. Unter Rühren der Reaktionsmasse wird der verschlossene Druckreaktor dann zügig für 4 Stunden auf 160°C erhitzt.

Man lässt den Reaktor erkalten, entspannt und gießt dessen nur noch mit wenigen sichtbaren Festkörperanteilen (Durchmesser < 1mm) durchsetzten, dünnflüssigen Inhalt in ein Becherglas mit Magnetrührkern. Das aus der Reaktion hervorgegangene Intermediat wird bei 22°C unter Rühren vorgelegt und mit 8,3 g wasserfreier Essigsäure (50% stöchiometrischer Überschuss) versetzt. Nach 30 Minuten trennt man die festen Bestandteile über einen Faltenfilter ab. Der isolierte Filterkuchen besteht aus einem feinkörnigen Niederschlag.

Das erhaltene Filtrat wird bei 60°C Sumpftemperatur und einem angelegten Hilfsvakuum < 5 mbar am Rotationsverdampfer von Flüchtigen befreit, wobei man eine leichte Eintrübung des Sumpfes durch Nachfällung beobachtet. Nochmalige Filtration über einen Faltenfilter liefert eine farblose klare Flüssigkeit, deren zugehöriges ²⁹Si-NMR-Spektrum belegt, dass ein lineares α,ω-Dimethoxy-polydimethylsiloxan der mittleren Kettenlänge N = 39,7 entstanden ist.

### Beispiel 2 (erfindungsgemäß)

In einem 500-ml-Vierhalskolben mit aufgesetztem Rückflusskühler und ausgerüstet mit einem KPG-Rührer und Innenthermometer werden 30 g einer in Stückchen irregulärer Geometrie von durchschnittlich ca. 3 bis 4 mm Größe zerschnittenen, vernetzten Silikonkautschuks gemeinsam mit 70 g Ethanol unter Rühren vorgelegt und mit 5 g pulverförmigem Kaliumethanolat (Hersteller) versetzt.

Unter weiterem Rühren lässt man die Mischung bei 80°C über einen Zeitraum von 6 Stunden bei leichtem Rückfluss reagieren. Bereits 45 Minuten nach Erreichen der Solltemperatur hat die Reaktionsmasse eine Homogenität und Durchmischbarkeit erreicht, so dass man weitere 30 g des zerkleinerten, vernetzten Silikonkautschuks hinzufügt. Nach weiteren 15 Minuten ergänzt man eine weitere Portion von 30 g des Silikonkautschuks. Nach weiteren 45 Minuten wird erneut eine 30-g-Portion des Silikonkautschuks in die Reaktionsmasse eingetragen.

Am Ende des ersten erfindungsgemäßen Schritts besteht der Kolbeninhalt aus einer viskoshomogenen Masse.

Anschließend kühlt man den Ansatz auf 60°C ab, versetzt mit 5,3 g wasserfreier Essigsäure (50% Überschuss) und rührt für 30 Minuten bei dieser Temperatur. Die Feststoffanteile werden mit Hilfe einer Filterpresse (K 300 Filterscheibe) abgetrennt. Eine Probe des so gewonnenen, farblosen Rückstands wird mit Hilfe der ²⁹Si-NMR-Spekroskopie untersucht. Die charakteristischen Signallagen des zugehörigen ²⁹Si-NMR-Spektrums belegen, dass ein lineares α,ω-Dimethoxy-polydimethylsiloxan der mittleren Kettenlänge von ca. 10,3 entstanden ist. Zudem gibt das Spektrum Hinweis auf eine Spur vorhandener Q-Strukturen (Signallagen im Bereich zwischen ca. -101 bis - 108 ppm).

## Patentansprüche

1. Verfahren zur Herstellung von einem oder mehreren Alkoxysiloxanen durch thermische Umsetzung von mindestens einem Abfallsilikon mit mindestens einem Alkalimetallalkoholat und mindestens einem Alkohol, **dadurch gekennzeichnet, dass** man
(a) in einem ersten Schritt das mindestens eine Abfallsilikon unter Durchmischung mit mindestens einem Alkohol und mindestens einem Alkalimetallalkoholat unter Wärmeeintrag umsetzt, und zwar ohne Entfernung von etwaig auftretendem Wasser aus der Reaktionsmischung, insbesondere ohne den Einsatz von mit Wasser Azeotrope bildenden Solventien und/oder ohne den Einsatz weiterer, wasserentziehender Mittel, und
(b) das aus dieser Reaktion hervorgehende Reaktionsgemisch in einem zweiten Schritt mit Hilfe von mindestens einer Brönstedtsäure gegebenenfalls unter Hinzufügen von mindestens einem Solvens neutralisiert, die festen Bestandteile abtrennt, insbesondere abfiltriert, und
(c) danach das oder die Alkoxysiloxane durch thermisches Abtrennen flüchtiger Verbindungen isoliert.

2. Verfahren nach Anspruch 1, **dadurch gekennzeichnet, dass** im ersten Schritt (a) mindestens ein zusätzliches Siloxan zugegeben wird, ausgewählt aus der Gruppe bestehend aus Hexamethylcyclotrisiloxan (Ds), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ, Silikonöle, Polydimethylsiloxandiole und α,ω-Divinytsitoxane.

3. Verfahren nach Anspruch 1 oder 2, **dadurch gekennzeichnet, dass** die Umsetzung in dem ersten Schritt (a) ohne die Verwendung wasserbindender Kieselsäureester, insbesondere ohne Einsatz von Tetraalkoxysilanen, vorgenommen wird.

4. Verfahren nach einem der Ansprüche 1 bis 3, **dadurch gekennzeichnet, dass** das mindestens eine Alkalimetallalkoholat der allgemeinen Formel [M⁺] [OR⁻] entspricht, wobei
M ausgewählt ist aus der Reihe der Alkalimetalle Li, Na oder K, bevorzugt Na oder K und
R einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt.

5. Verfahren nach einem der Ansprüche 1 bis 4, **dadurch gekennzeichnet, dass** der im ersten Schritt eingesetzte mindestens eine Alkohol ausgewählt ist aus der Gruppe bestehend aus lineare, verzweigte und zyklische C₁ bis C₁₀- Alkanole, wobei vorzugsweise Methanol, Ethanol, 1- Propanol, Isopropanol, 1-Butanol, 2-Butanol, iso-Butanol, Pentanole, Hexanole, Heptanole, Octanole, Nonanole und/oder Dekanole, jeweils umfassend auch deren Isomere, eingesetzt werden, besonders bevorzugt werden Methanol und/oder Ethanol eingesetzt.

6. Verfahren nach einem der Ansprüche 1 bis 5, **dadurch gekennzeichnet, dass** der mindestens eine Alkohol in Gesamt-Mengen von 10 bis 200 Massen-%, bevorzugt 20 bis 100 Massen-%, besonders bevorzugt 30 bis 80 Massen-% bezogen auf die Gesamt-Masse des bei der Umsetzung insgesamt verwendeten Silikons, welches der Summe aus der Masse des gesamt eingesetzten mindestens einen Abfallsilikons plus der ggf. noch hinzugesetzten Masse an optionalem, weiteren Siloxan entspricht, eingesetzt wird.

7. Verfahren nach einem der Ansprüche 1 bis 6, **dadurch gekennzeichnet, dass** das mindestens eine Alkalimetallalkoholat in einer Gesamt-Mengen von 1 bis 10 Massen-%, bevorzugt von 2 bis 7 Massen-%, besonders bevorzugt von 3 bis 6 Massen-% bezogen auf die Gesamt-Masse des bei der Umsetzung insgesamt verwendeten Silikons, welche der Summe aus der Masse an gesamten eingesetzten mindestens einen Abfallsilikons plus der ggf. noch hinzugesetzten Masse an optionalem, weiteren Siloxan entspricht, eingesetzt wird.

8. Verfahren nach einem der Ansprüche 1 bis 7, **dadurch gekennzeichnet, dass** als in dem zweiten Verfahrensschritt (b) hinzugefügte mindestens eine Brönstedtsäure wasserfreie Mineralsäure und/oder wasserfreie organische Säure, insbesondere wasserfreie Schwefelsäure, wasserfreie Perchlorsäure und/oder wasserfreie Essigsäure eingesetzt wird.

9. Verfahren nach einem der Ansprüche 1 bis 8, **dadurch gekennzeichnet, dass** in dem zweiten Verfahrensschritt (b) mindestens ein Solvens hinzugefügt wird, vorzugsweise ausgewählt aus der Gruppe bestehend aus Alkanen, Alkylaromaten, Alkoholen, Hexamethylcyclotrisiloxan (D₃), Octamethylcyclotetrasiloxan (D₄), Dekamethylcyclopentasiloxan (D₅) und Dodekamethylcyclohexasiloxan (D₆).

10. Verfahren nach einem der Ansprüche 1 bis 9, **dadurch gekennzeichnet, dass** die thermische Umsetzung des mindestens einen Abfallsilikons in dem ersten Schritt (a) bei Temperaturen zwischen 50°C und 200°C, bevorzugt zwischen 80°C und 180°C, insbesondere zwischen 120°C und 170°C vorgenommen wird.

11. Verfahren nach einem der Ansprüche 1 bis 10, **dadurch gekennzeichnet, dass** die thermische Umsetzung des mindestens einen Abfallsilikons in dem ersten Schritt (a) über einen Zeitraum von 1 bis 12 Stunden, bevorzugt über einen Zeitraum von 2 bis 8 Stunden durchgeführt wird.

12. Verfahren nach einem der Ansprüche 1 bis 11, **dadurch gekennzeichnet, dass** die thermische Umsetzung des mindestens einen Abfallsilikons in dem ersten Schritt (a) bei einem Druck größer 1.013,25 hPa durchgeführt wird.

13. Verfahren nach einem der Ansprüche 1 bis 12, **dadurch gekennzeichnet, dass** das mindestens eine Abfallsilikon vor der thermischen Umsetzung mechanisch zerkleinert wird.

14. Alkoxysiloxane, erhältlich nach einem der Ansprüche 1 bis 13.

15. Verwendung von Alkoxysiloxanen gemäß Anspruch 14 als polymerisationsaktive Massen, bevorzugt als Kleb - und/oder Dichtstoffe.

16. Verwendung von Alkoxysiloxanen gemäß Anspruch 14 zur Herstellung von SiOC-verknüpften Polyethersiloxanen durch Umesterung der Alkoxysiloxane mit Polyetherolen in Gegenwart von Zinkacetylacetonat als Katalysator.
